Europäisches Patentamt

European Patent Office

Office européen des brevets

(11) Veröffentlichungsnummer: **0 199 913**
**B1**

(12) **EUROPÄISCHE PATENTSCHRIFT**

(45) Veröffentlichungstag der Patentschrift: 06.06.90

(51) Int. Cl.⁵: **G 01 B 5/255**

(21) Anmeldenummer: **86101975.0**

(22) Anmeldetag: **17.02.86**

(54) Einrichtung zur Vermessung der Achsgeometrie an den Radachsen von Kraftfahrzeugen bei drehenden Rädern.

(30) Priorität: 24.04.85 DE 3514759

(43) Veröffentlichungstag der Anmeldung:
05.11.86 Patentblatt 86/45

(45) Bekanntmachung des Hinweises auf die
Patenterteilung:
06.06.90 Patentblatt 90/23

(84) Benannte Vertragsstaaten:
CH DE FR GB IT LI SE

(56) Entgegenhaltungen:
DE-A-3 136 145
DE-B-2 204 918
DE-B-2 838 399
DE-U-8 210 960
FR-A-2 402 184
US-A-3 453 740
US-A-3 566 476

(73) Patentinhaber: WECO-Industrietechnik GmbH
August-Bode-Strasse 1
D-3500 Kassel (DE)

(72) Erfinder: Schrammen, Peter, Dr.Dipl.-Phys.
Korbacher Strasse 247
D-3500 Kassel (DE)
Erfinder: Weide, Jürgen, Dipl.-Ing. (FH)
Brüder-Grimm-Strasse 101
D-3500 Kassel (DE)

(74) Vertreter: Feder, Wolf-Dietrich et al
Dr. Wolf-D. Feder, Dr. Heinz Feder Dipl.-Ing. P.-C.
Sroka Dominikanerstrasse 37
D-4000 Düsseldorf 11 (DE)

# Beschreibung

Die Erfindung betrifft eine Einrichtung zur Vermessung der Achsgeometrie an den Radachsen von Kraftfahrzeugen bei drehenden Rädern, mit mindestens zwei im wesentlichen im Abstand der Spurweite des Kraftfahrzeugs angeordneten, antreibbaren Laufwalzenpaaren, auf welche die Vorder- oder Hinterräder des Kraftfahrzeugs aufsetzbar sind, wobei jedes Laufwalzenpaar in einem in einer horizontalen Ebene gegenüber einem Grundgestell bewegbaren Rahmen angeordnet ist und an die Seitenfläche des auf das Laufwalzenpaar aufgesetzten Rades eine Abtastvorrichtung ansetzbar ist, die mit einer Winkelmeßvorrichtung verbunden ist, durch welche die Stellung der an das Rad angesetzten Abtastvorrichtung gegenüber einem einrichtungsfesten Bezugssystem meßbar ist.

Eine derartige Vorrichtung ist beispielsweise in DE-OS 22 04 918 beschrieben.

Bei der bekannten Einrichtung ist der Rahmen in der horizontalen Ebene drehbar angeordnet und gegebenenfalls in Querrichtung zum Kraftfahrzeug verschiebbar. Die Abtastvorrichtung ist am Rahmen angeordnet und bei Abstützung der Abtastvorrichtung an den Seitenflächen des Rades bewirkt die auf die Abtastvorrichtung wirkende Reaktionskraft, daß sich das Laufwalzenpaar senkrecht zum Rahmen einstellt. Es wird dann die Verdrehung des Rahmens gemessen und hieraus die Vorspur bestimmt. Sturz, Nachlauf und Spreizung werden durch an der Abtastvorrichtung angeordnete Winkelmeßvorrichtungen gemessen.

Diese bekannte Einrichtung hat den Nachteil, daß sie nur dann einigermaßen genaue Meßwerte liefert, wenn die Lauffläche des Radreifens eine ideale Form aufweist. Sobald die Lauffläche des Radreifens, beispielsweise konisch ausgebildet ist, ist keine kraftfreie Messung mehr möglich, weil durch die Konizität des Radreifens Querkräfte erzeugt werden, die zusätzlich auf das Laufwalzenpaar einwirken und die Messung verfälschen. Weiterhin ist bei der bekannten Einrichtung, damit das Fahrzeugrad nicht seitlich verschoben wird, eine zweite Abtastvorrichtung an der Innenseite des Rades angesetzt. Die Anordnung einer derartigen zweiten Abtastvorrichtung an der Innenseite des Rades stößt aber bei einem am Kraftfahrzeug montierten Rad auf erhebliche konstruktive Schwierigkeiten, da im allgemeinen der hierfür benötigte Platz nicht vorhanden ist.

In der US-A- 3 453 740 sind Laufwalzenpaare geoffenbart, die in einem Rahmen angeordnet sind, welcher um feste Drehachsen schwenkbar, aber nicht in Längsrichtung verschiebbar sind. Als Verbesserung dieses Standes der Technik wird in der Druckschrift eine Einrichtung vorgeschlagen, bei der die Rahmen um Achsen schwenkbar sind, die in Bezug auf die Laufrichtung des Rades neben dem Rad auf der Längsmittelachse des Laufwalzenpaares angeordnet sind. Weiterhin sind die die Laufwalzenpaare tragenden Rahmen entlang Schienen parallel zur Längsrichtung des Fahrzeugs verschiebbar. Durch die Verschwenkbarkeit der Rahmen soll erreicht werden, daß die Messung von Spur und Sturz auch bei relativ großem gleichsinnigem Einschlag der Vorderräder durchgeführt werden kann. Die Rahmen mit den Laufwalzenpaaren werden durch eine Einstellvorrichtung aktiv so ausgerichtet, daß die Reaktionskräfte auf eine zusätzliche Prüfwalze Null werden.

Es sind weiterhin Vorrichtungen bekannt, die die Messung der Achsgeometrie durch Abtastung an den Reifenseitenwänden bei stehendem Rad durchführen. Das Fahrzeug steht dabei auf schwimmfähigen Laufwalzenpaaren, die eine verspannungsfreie Messung einerseits und eine Drehung der Räder um 180° zur Felgenschlageliminantion ermöglichen.

Diese Einrichtungen eignen sich nicht für die Vermessung von Kraftfahrzeugrädern, die starke Unregelmäßigkeiten, wie z.B. erhabene Buchstaben auf den Reifenseitenwänden aufweisen.

Es sind weiterhin Einrichtungen bekannt, die eine Messung durch Abtastung an den Reifenseitenwänden bei drehendem Rad auf festen Laufwalzenpaaren vornehmen. Unregelmäßigkeiten am Rad, wie die oben beschriebenen Buchstaben, werden hier durch die Trägheit des Meßsystem eliminiert.

Um seitliche Abwanderungen des Kraftfahrzeugs zu verhindern, muß dieses jedoch in Querrichtung fixiert werden, was wegen der endlichen Spur des Kraftfahrzeugs zwangsweise zu einer Verspannung der Radaufhängung und damit zu fehlerhaften Meßergebnissen führt.

Schließlich sind Einrichtungen bekannt, bei denen die Reaktionskräfte (z.B. Querkräfte des drehenden Rades) auf das Laufwalzenpaar dazu benutzt werden, das Laufwalzenpaar entweder direkt oder über Servosysteme so zum Rad auszurichten, daß die Reaktionskräfte zu Null werden.

Die durch die Nachführung bewirkten Winkelstellungen der Laufwalzenpaare gegenüber einem einrichtungsfesten Bezugssystem werden unmittelbar als Maß für Achsgeometriegrößen, wie Spur und Sturz, verwendet.

Auch dieses Verfahren hat den Nachteil, daß das Ergebnis durch nichtideale Reifen (wie z.B. Konizität) und die dadurch bewirkten Kräfte unzulässig verfälscht wird.

Die der Erfindung zugrunde liegende Aufgabe bestand darin, eine Einrichtung der eingangs erwähnten Bauart so auszubilden, daß die Messung der Achsgeometrie durch Abtastung an den Reifenseitenwänden bei kontinuierlich drehenden Rädern unter Vermeidung jeglicher Verspannung der Radaufhängungen möglich wird.

Die Lösung dieser Aufgabe erfolgt erfindungsgemäß dadurch, daß der Rahmen auf dem Grundgestell in der horizontalen Ebene um eine in Längsrichtung des Kraftfahrzeugs außerhalb des Laufwalzenpaares und in Bezug auf die Laufrichtung des Rades vor dem Rad und auf der Quermittelachse des Laufwalzenpaares angeordnete Achse frei schwenkbar und in einer Richtung parallel zur Längsrichtung des Kraftfahrzeugs frei verschiebbar gelagert ist.

Dabei kann bei einer Ausführungsform die mit dem Rahmen verbundene Schwenkachse in einer parallel zur Längsrichtung des Kraftfahrzeuges am Grundgestell angeordneten Führung geführt sein. Bei einer anderen Ausführungsform kann der Rahmen auf einer auf dem Grundgestell über Rollen gelagerten in einer Richtung parallel zur Längsrichtung des Kraftfahrzeugs verschiebbaren Zwischenplatte über Rollen gelagert sein und die Schwenkachse mit der Zwischenplatte drehbar verbunden sein.

Es hat sich als vorteilhaft erwiesen, wenn die Einrichtung vier Laufwalzenpaare aufweist, wobei zwei Paare den Vorderachsen und zwei Paare den Hinterachsen zugeordnet sind. Hierbei ist es zweckmäßig, wenn eine Vorrichtung zur Fixierung der Karosserie des Kraftfahrzeugs am Grundgestell vorhanden ist.

Eine solche Fixierung in Längsrichtung ist nicht erforderlich bei einer Ausführungsform, bei der jeder der vier Rahmen unabhängig von den anderen um seine Schwenkachse verschwenkbar angeordnet ist und die beiden Rahmen für die Vorderachsen oder die beiden Rahmen für die Hinterachsen jeweils so miteinander verbunden sind, daß in der Richtung parallel zur Längsachse des Kraftfahrzeugs nur eine gegensinnige Verschiebung zwischen ihnen möglich ist.

Bei der erfindungsgemäßen Einrichtung stellen sich die Laufwalzenpaare automatisch in einer Gleichgewichtslage so auf die drehenden Fahrzeugräder ein, daß die Querkräfte zu Null werden. Das Fehlen von Querkräften trotz drehender Räder erlaubt die Vermessung der Achsgeometrie durch Abtastung an den Reifenseitenwänden und zusätzlich gleichzeitig eine Fixierung der Fahrzeugkarosserie, z.B. zum Zwecke der gleichzeitigen Scheinwerfereinstellung.

Im folgenden werden anhand der beigefügten Zeichnungen Ausführungsbeispiele für Einrichtungen nach der Erfindung näher erläutert.

In den Zeichnungen zeigen:

Fig. 1 in einer perspektivischen schematisierten Teilansicht eine erste Ausführungsform einer Einrichtung zur Vermessung der Achsgeometrie an den Radachsen von Kraftfahrzeugen;

Fig. 2 in einer Darstellung analog Fig. 1 eine andere Ausführungsform einer Einrichtung zur Vermessung der Achsgeometrie an den Radachsen von Kraftfahrzeugen;

Fig. 3 in einer schematischen Teilaufsicht eine Einrichtung bei der jeweils die den Vorderachsen oder den Hinterachsen des Kraftfahrzeugs zugeordneten Einrichtungteile miteinander verbunden sind.

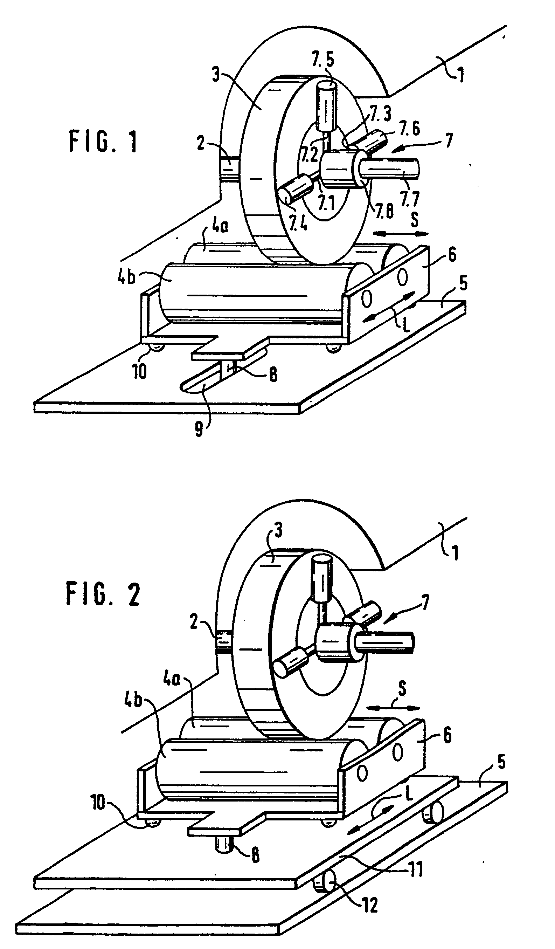

In Fig. 1 sind von einem Prüfstand zur Messung der Achsgeometrie eines teilweise dargestellten Kraftfahrzeugs 1 nur die für die Erfindung wesentlichen Teile dargestellt.

Auf einer mit dem Grundgestell verbundenen Grundplatte 5 ist über Rollen 10 ein Rahmen 6 in einer horizontalen Ebene bewegbar gelagert, in dem ein Laufwalzenpaar 4a und 4b angeordnet ist, auf das zur Durchführung der Vermessung der Radachse 2 des Kraftfahrzeugs 1 das Rad 3 aufgesetzt ist. Der Rahmen 6 ist um eine Schwenkachse 8 schwenkbar, die in Bezug auf die Laufrichtung des Rades 3 vor dem Laufwalzenpaar 4a, 4b auf der Quermittelachse des Laufwalzenpaares angeordnet und in einem in Längsrichtung des Kraftfahrzeugs 1 in der Grundplatte 5 angeordneten Schlitz 9 frei verschiebbar geführt ist.

Es läßt sich leicht aus Fig. 1 ablesen, daß der Rahmen 6 hierdurch in Pfeilrichtung L frei verschiebbar und um die Achse 8 in Pfeilrichtung S frei verschwenkbar ist.

An die Seitenwände des Rades 3 ist eine Abtastvorrichtung (7) an sich bekannter Bauart mit drei T-förmig zueinanderstehenden Abtastarmen 7.1, 7.2, 7.3 angeordnet, an deren Enden sich an das Rad anliegende Rollen 7.4, 7.5 und 7.6 angeordnet sind. Die Abtastarme sind gegenüber der Achse 7.7 verschwenkbar, wobei die Schwenkwinkel durch eine Winkelmeßvorrichtung 7.8 gemessen werden.

Die Einrichtung nach Fig. 2 ist grundsätzlich analog aufgebaut wie die Einrichtung nach Fig. 1. Aus diesem Grunde sind sich genau entsprechende Teile mit den gleichen Bezugsziffern bezeichnet.

Bei dieser Einrichtung ist der Rahmen 6 mit den Laufrollen 4a, 4b über Rollen 10 auf einer Zwischenplatte 11 gelagert, die ihrerseits in Längsrichtung L verschiebbar über Rollen 12 auf der Grundplatte 5 gelagert ist. Gegenüber der Zwischenplatte 11 ist der Rahmen 6 nicht verschiebbar, sondern nur um die drehbar mit der Zwischenplatte 11 verbundene Schwenkachse 8 verschwenkbar angeordnet.

Die Funktionsweise der beiden in Fig. 1 und Fig. 2 dargestellten Einrichtungen ist die gleiche.

Es sind verschiedene Varianten für die Ausbildung von Prüfständen unter Verwendung der oben beschriebenen Einrichtungen möglich.

So kann beispielsweise der Prüfstand so ausgebildet sein, daß er zwei Rahmen mit Laufwalzenpaaren aufweist, die nebeneinander im wesentlichen im Abstand der Spurweite des Fahrzeugs angeordnet sind, so daß entweder die beiden Vorderräder oder die beiden Hinterräder auf die Laufwalzenpaare aufsetzbar sind. In diesem Falle kann auf eine zusätzliche Fixierungsvorrichtung zur Festlegung der Fahrzeugkarosserie gegenüber dem Grundgestell verzichtet werden, da beispielsweise die Hinterräder feststehen.

Der Prüfstand kann aber auch als Zweiachsanlage mit insgesamt vier Rahmen mit Laufwalzenpaaren ausgebildet sein, wobei zwei Laufwalzenpaare den Vorderachsen und zwei Laufwalzenpaare den Hinterachsen zugeordnet sind.

In diesem Falle ist im allgemeinen eine Fixierung des Kraftfahrzeugs in Längs- und Querrichtung notwendig.

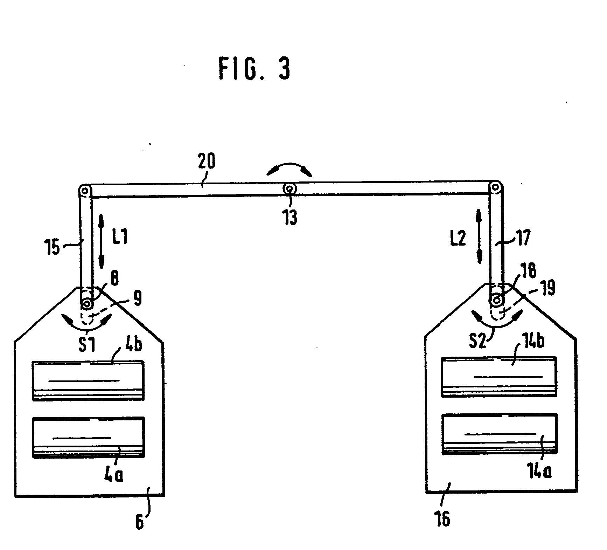

Eine Fixierung in Längsrichtung kann entfallen, wenn dafür gesorgt ist, daß die beiden Rahmen, die der Vorderachse oder der Hinterachse zugeordnet sind, jeweils so miteinander verbunden werden, daß sie zwar unabhängig voneinander schwenkbar sind, sich aber in Fahrtrichtung nur gegensinnig bewegen können. Eine solche Vorrichtung ist in Fig. 3 schematisch dargestellt.

Zwei Rahmen 6 und 16, in denen Laufwalzenpaare 4a, 4b bzw. 14a, 14b angeordnet sind, sind beispielsweise den beiden Vorderachsen eines Kraftfahrzeuges, dessen Achsgeometrie vermessen werden soll, zugeordnet und daher etwa im Abstand der Spurweite des Kraftfahrzeugs nebeneinander angeordnet.

Der Rahmen 6 ist um die Schwenkachse 8 frei in Pfeilrichtung S1 verschwenkbar, während der Rahmen 16 um die Schwenkachse 18 in Pfeilrichtung S2 frei verschwenkbar ist. Die Schwenkachsen 8 und 18 sind in Schlitzen 9 und 19 der nicht dargestellten Grundplatte geführt. Weiterhin ist die Schwenkachse 8 über eine Zugstange 15 und die Schwenkachse 18 über eine Zugstange 17 jeweils mit den beiden Enden eines um die Drehachse 13 schwenkbaren Hebels 20 verbunden. Dies hat zur Folge, daß sich die beiden Schwenkachsen 8 und 18 in Längsrichtung des Kraftfahrzeugs, also in Pfeilrichtung L1 und L2, nur gegensinnig bewegen können.

## Patentansprüche

1. Einrichtung zur Vermessung der Achsgeometrie an den Radachsen von Kraftfahrzeugen bei drehenden Rädern mit mindestens zwei im wesentlichen im Abstand der Spurweite des Kraftfahrzeuges angeordneten, antreibbaren Laufwalzenpaaren (4a, 4b), auf welche die Vorder- oder Hinterräder (3) des Kraftfahrzeugs (1) aufsetzbar sind, wobei jedes Laufwalzenpaar (4a, 4b) in einem in einer horizontalen Ebene gegenüber einem Grundgestell (5) bewegbaren Rahmen (6) angeordnet ist und an die Seitenfläche des auf das Laufwalzenpaar aufgesetzten Rades (3) eine Abtastvorrichtung (7) ansetzbar ist, die mit einer Winkelmeßvorrichtung verbunden ist, durch welche die Stellung der an das Rad angesetzten Abtastvorrichtung (7) gegenüber einem einrichtungsfesten Bezugssystem meßbar ist, dadurch gekennzeichnet, daß der Rahmen (6) auf dem Grundgestell (5) in der horizontalen Ebene um eine in Längsrichtung des Kraftfahrzeugs außerhalb des Laufwalzenpaares (4a, 4b) und in Bezug auf die Laufrichtung des Rades (3) vor dem Rad (3) auf der Quermittelachse des Laufwalzenpaares (4a, 4b) angeordnete Achse (B) frei schwenkbar und in einer Richtung (L) parallel zur Längsrichtung des Kraftfahrzeugs frei verschiebbar gelagert ist.

2. Einrichtung nach Anspruch 1, dadurch gekennzeichnet, daß die mit dem Rahmen (6) verbundene Schwenkachse (8) in einer parallel zur Längsrichtung des Kraftfahrzeuges am Grundgestell (5) angeordneten Führung (9) geführt ist.

3. Einrichtung nach Anspruch 1, dadurch gekennzeichnet, daß der Rahmen (6) auf einer auf dem Grundgestell (5) über Rollen (12) gelagerten, in einer Richtung (L) parallel zur Längsrichtung des Kraftfahrzeugs verschiebbaren Zwischenplatte (11) über Rollen (10) gelagert ist und die Schwenkachse (8) mit der Zwischenplatte (11) drehbar verbunden ist.

4. Einrichtung nach einem der Ansprüche 1 bis 3, dadurch gekennzeichnet, daß sie vier Laufwalzenpaare (4a, 4b, 14a, 14b) aufweist, wobei zwei Paare den Vorderachsen, zwei Paare den Hinterachsen zugeordnet sind.

5. Einrichtung nach Anspruch 4, dadurch gekennzeichnet, daß eine Vorrichtung zur Fixierung der Karosserie des Kraftfahrzeugs am Grundgestell vorhanden ist.

6. Einrichtung nach Anspruch 4, dadurch gekennzeichnet, daß jeder der vier Rahmen (6, 16) unabhängig von den anderen um seine Schwenkachse (8, 18) verschwenkbar angeordnet ist und die beiden Rahmen (6, 16) für die Vorderachsen oder die beiden Rahmen für die Hinterachsen jeweils so miteinander verbunden sind, daß in der Richtung (L1, L2) parallel zur Längsachse des Kraftfahrzeugs nur eine gegensinnige Verschiebung zwischen ihnen möglich ist.

## Revendications

1. Dispositif pour mesurer la géométrie des essieux de véhicules automobiles lorsque les roues tournent comportant au moins deux paires de cylindres tournants, pouvant être entraînés, placées à une distance, sensiblement égale à la voie du véhicule automobile, cylindres sur lesquels les roues avant ou les roues arrière (3) du véhicule automobile (1) peuvent être montées, chaque paire de cylindres (4a, 4b) étant disposée dans un châssis (6) mobile dans un plan horizontal par rapport à un bâti (5), et sur la surface latérale de la roue (3) montée sur la paire de cylindres pouvant être monté un dispositif capteur (7) qui est relié à un dispositif de mesure d'angle au moyen duquel peut être mesurée la position du dispositif capteur (7) monté sur la roue par rapport à un système de référence fixe, caractérisé par le fait que le châssis (6) est monté sur le bâti (5) de manière librement pivotable dans le plan horizontal autour d'un axe (8) disposé en direction longitudinale du véhicule extérieurement à la paire de cylindre (4a, 4b) et, par rapport à la direction de rotation de la roue (3), avant celle-ci sur l'axe transversal de ladite paire de cylindres (4a, 4b) et mobile librement dans une direction (L) parallèle à la direction longitudinale du véhicule.

2. Dispositif selon la revendication 1, caractérisé par le fait que l'axe de pivotement (8) relié au châssis (6) est monté dans un guidage (9) disposé parallèlement à la direction longitudinale du véhicule, sur le bâti (5).

3. Dispositif selon la revendication 1, caractérisé par le fait que le châssis (6) est monté par des roulettes (10) sur un plateau intermédiaire (11) monté sur le bâti (5) par des roulettes (12) et mobile dans une direction (L) parallèle à la direction longitudinale du véhicule et que l'axe de rotation (8) est relié de manière rotative audit plateau intermédiaire (11).

4. Dispositif selon l'une des revendications 1 à 3, caractérisé par le fait qu'il présente quatre paires de cylindres tournants (4a, 4b, 14a, 14b), deux paires étant associées aux essieux avant et deux paires aux essieux arrière.

5. Dispositif selon la revendication 4, caractérisé par le fait que sur le bâti se trouve un dispositif pour la fixation de la carrosserie du véhicule.

6. Dispositif selon la revendication 4, caractérisé par le fait que chacun des quatre châssis (6, 16) est disposé, indépendamment des autres, de manière à pouvoir pivoter autour de son axe (8, 18) et que les deux châssis (6, 16) pour les essieux avant et les deux châssis pour les essieux arrière sont reliés mutuellement de telle manière que dans la direction (L1, L2) parallèle à l'axe longitudinal du véhicule le seul déplacement possible entre eux est un déplacement opposé.

## Claims

1. Apparatus for the measurement of the axle geometry on the wheel axles of motor vehicles while the wheels are rotating, having at least two pairs of drivable running rollers (4a, 4b), arranged essentially at the distance of the track width of the motor vehicle, on which pairs of running rollers (4a, 4b) the front wheels or rear wheels (3) of the motor vehicle (1) can be placed, each pair of running rollers (4a, 4b) being arranged in a frame (6), which can be moved in a horizontal plane in relation to a base mount (5), and a scanning device (7) being able to be placed against the lateral surface of the wheel (3) placed on the pair of running rollers, which scanning device (7) is connected to an angle measuring device, by means of which the position of the scanning device (7) placed against the wheel can be measured in relation to a fixed reference system, characterized in that the frame (6) on the base mount (5) is mounted freely swivellably in the horizontal plane about an axis (8) arranged in longitudinal direction of the motor vehicle outside the pair of running rollers (4a, 4b) and, with regard to the running direction of the wheel (3), before the wheel (3) on the transverse mid-axis of the pair of running rollers (4a, 4b) and freely displaceably in a direction (L) parallel to the longitudinal direction of the motor vehicle.

2. Apparatus according to Claim 1, characterized in that the swivel axis (8), connected to the frame (6) is guided in a guide (9) arranged on the base mount (5) parallel to the longitudinal direction of the motor vehicle.

3. Apparatus according to Claim 1, characterized in that the frame (6) is mounted via rolls (10) on an intermediate plate (11) which is mounted via rolls (12) on the base mount (5) and is displaceable in a direction (L) parallel to the longitudinal direction of the motor vehicle and the swivel axis (8) is rotatably connected to the intermediate plate (11).

4. Apparatus according to one of Claims 1 to 3, characterized in that it has four pairs of running rollers (4a, 4b, 14a, 14b), two pairs being assigned to the front axles, two pairs to the rear axles.

5. Apparatus according to Claim 4, characterized in that a device is available for fixing the bodywork of the motor vehicle to the base mount.

6. Apparatus according to Claim 4, characterized in that each of the four frames (6, 16) is arranged swivellably about its swivel axis (8, 18), independently of the others, and the two frames (6, 16) for the front axles or the two frames for the rear axles are connected to each other in each case in such a way that, in the direction (L1, L2) parallel to the longitudinal axis of the motor vehicle, a displacement between them is only possible in opposite direction.

FIG. 1

FIG. 2

# FIG. 3